(19) Europäisches Patentamt
European Patent Office
Office européen des brevets

(11) **EP 1 977 125 B1**

(12) **EUROPÄISCHE PATENTSCHRIFT**

(45) Veröffentlichungstag und Bekanntmachung des Hinweises auf die Patenterteilung:
**01.06.2011 Patentblatt 2011/22**

(51) Int Cl.:
*F16C 19/38* (2006.01)     *F16C 19/50* (2006.01)
*F16C 33/36* (2006.01)

(21) Anmeldenummer: 07702339.8

(22) Anmeldetag: **16.01.2007**

(86) Internationale Anmeldenummer:
**PCT/DE2007/000055**

(87) Internationale Veröffentlichungsnummer:
**WO 2007/085227 (02.08.2007 Gazette 2007/31)**

(54) **Mehrreihiges Schrägkugelrollenlager**

Multi-row angular contact roller bearing with spherical rollers

Roulement à rouleaux sphériques à plusieurs rangées à contact oblique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.01.2006 DE 102006003691**

(43) Veröffentlichungstag der Anmeldung:
**08.10.2008 Patentblatt 2008/41**

(73) Patentinhaber: **Schaeffler Technologies GmbH & Co. KG**
**91074 Herzogenaurach (DE)**

(72) Erfinder:
• **HOFMANN, Heinrich**
**97422 Schweinfurt (DE)**

• **DÖPPLING, Horst**
**D-91074 Herzogenaurach (DE)**
• **EIDLOTH, Rainer**
**91074 Herzogenaurach (DE)**
• **RUOFF, Gottfried**
**97464 Oberwerrn (DE)**

(56) Entgegenhaltungen:
WO-A-2007/000149     BE-A- 365 366
DE-A1- 4 334 195     DE-A1-102005 014 556
DE-C- 331 455     DE-C- 391 950
DE-C- 497 760     GB-A- 156 523
JP-A- 2003 184 885

EP 1 977 125 B1

## Beschreibung

### Gebiet der Erfindung

Die Erfindung betrifft ein mehrreihiges Schrägkugelrollen lager, das insbesondere vorteilhaft als zwei- oder vierreihigen Kugelrollenlagern zur Abstützung von Wellen oder Naben mit axialer und radialer Momentbelastung realisierbar, ist.

### Hintergrund der Erfindung

Dem Fachmann in der Wälzlagertechnik ist es allgemein bekannt, dass die Abstützung von Wellen oder Naben mit axialer und radialer Momentbelastung zumeist über Schrägwälzlager erfolgt, die aufgrund der hohen Beanspruchung in aller Regel als zwei gegeneinander angestellte sowie in Axialrichtung vorgespannte Kegelrollenlager ausgebildet sind. Diese Kegelrollenlager werden bei hohen auftretenden Axialkräften mit einem großen Druckwinkel ausgebildet und sorgen für eine hohe Steifigkeit der abgestützten Welle. Für eine optimale Lagerkinematik sind diese Kegelrollenlager konstruktiv derart gestaltet, dass die Längsachse der Kegelrollen grundsätzlich rechtwinklig zur jeweiligen Druckwinkelachse angeordnet und der Kegelwinkel der Kegelrollen sowie der Anstellwinkel der Laufbahnen in den Lagerringen so bemessen ist, dass ein die Kegelrollen umschließende Hüllkegel mit seiner Kegelspitze genau auf dem Punkt der Lagerlängsachse angeordnet ist, an dem auch die Kegelrollenlängsachse die Lagerlängsachse schneidet. Dadurch wird erreicht, dass sowohl die Kegelrollen als auch deren Laufbahnen auf ihrer gesamten Breite einer gleichmäßigen Belastung unterliegen.

Da bei derartigen Kegelrollenlagern jedoch aufgrund ihrer Vorspannung zwischen der Stirnfläche der Kegelrollen und der Führungsfläche des Lagerbords eine gleitende Reibung einsetzt, durch die es zu einem Verschleiß an den Kegelrollen und am Lagerbord kommt, wurde es durch die DE 198 39 481 A1 vorgeschlagen, die Kegelrollenlager durch einseitig belastbare zweireihige Tandem-Schrägkugellager zu ersetzen, die zueinander in O-Anordnung angestellt sind. Diese Tandem-Schrägkugellager bestehen im Wesentlichen aus einem äußeren Lagerring und einem inneren Lagerring sowie aus einer Vielzahl zwischen den Lagerringen angeordneter Lagerkugeln, die in zwei Reihen mit unterschiedlichen Teilkreisdurchmessern höhenversetzt nebeneinander angeordnet sind und durch zwei getrennte Lagerkäfige für jede Reihe in Umfangsrichtung in gleichmäßigen Abständen zueinander gehalten werden. Die Innenseite des äußeren Lagerrings ist dabei mit zwei benachbarten rillenförmigen Laufbahnen ausgebildet, die auf gemeinsamen Druckwinkelachsen mit zwei ebenfalls benachbarten rillenförmigen Laufbahnen in der Außenseite des inneren Lagerrings angeordnet sind. Auf diesen Laufbahnen rollt jeweils eine Reihe der Lagerkugeln mit ihren Laufflächen ab, wobei die Lagerkugeln der Reihe mit dem größeren Teilkreisdurchmesser einen größeren Durchmesser als die Lagerkugeln der Reihe mit dem kleineren Teilkreisdurchmesser aufweisen. Durch den Einsatz solcher Tandem-Schrägkugellager anstelle von Kegelrollenlagern soll dabei erreicht werden, dass sich aufgrund der nunmehr entfallenden Gleitreibung zwischen den Lagerkugeln und den Laufbahnschultern ein wesentlich geringeres Reibmoment ergibt, durch das der Verschleiß und die Temperatur des Lagers gesenkt und dessen Wirkungsgrad verbessert wird.

Dennoch hat sich ein solcher Ersatz von Kegelrollenlagern durch zweireihige Tandem-Schrägkugellager in der Praxis dahingehend als nachteilig erwiesen, dass diese Tandem-Schrägkugellager durch die nebeneinander angeordneten Laufbahnen für die Lagerkugeln sowie durch die zum Erreichen der erforderlichen Traglast großen Durchmesser der Lagerkugeln im Vergleich zu Kegelrollenlagern einen erhöhten axialen Einbauraum erfordern. Soll ein solches Tandem-Schrägkugellager darüber hinaus noch eine höhere Traglast als ein Kegelrollenlager aufweisen, sind somit aufwändige Änderungen der Lagersitze notwendig, welche die Herstellungskosten des jeweiligen Bauteils in nachteiliger Weise erhöhen. Darüber hinaus verursachen solche zweireihigen Tandem-Schrägkugellager gegenüber Kegelrollenlagern nicht zuletzt wegen der notwendigen Verwendung von zwei Lagerkäfigen auch einen erhöhten Fertigungs- und Materialaufwand bei der Lagerherstellung, so dass sich deren Herstellungskosten ebenfalls erhöhen. Auch hinsichtlich der Lagerkinematik haben sich solche Tandem-Schrägkugellager als nicht optimal erwiesen, da sich bei den verwendeten großen Lagerkugeln der beiden Reihen ein deren Durchmesser tangierender Hüllkegel ergibt, dessen Kegelspitze vom Schnittpunkt der zur Druckwinkelachse rechtwinkligen Querachse zweier nebeneinander angeordneter Kugeln mit der Lagerlängsachse erheblich abweicht.

Aus dem Dokument DE 497 760 C ist ein zweireihiges Schrägkugellager bekannt, bei dem die Laufkreise der rillenförmigen Laufbahnen des Außenrings und des Innenrings jeweils auf einem Hüllkegel liegen und die beiden Hüllkegel eine gemeinsame Spitze auf der Lagerlängsachse haben.

Weiter beschreibt Dokument DE 331 455 C Wälzlager, bei denen die Wälzkörper als Kugelscheiben ausgebildet sind. In einer Ausführungsform ist das Kugelrollenlager als zweireihiges Radiallager ausgebildet, wobei die benachbarten Kugelscheiben unmittelbar nebeneinander und parallel zueinander angeordnet sind. In einer weiteren Ausführungsform ist das Kugelrollenlager als zweireihiges Schrägkugelrollenlager ausgebildet, wobei die beiden Kugelrollenreihen in O-Anordnung angeordnet sind.

Zur Vermeidung der Nachteile der Tandem-Schrägkugellager wurde es deshalb durch die zum Anmeldezeitpunkt der vorliegenden Patentanmeldung noch nicht veröffentlichte deutsche Patentanmeldung DE 10 2005 029 983 A bzw. WO 2007/000149 A vorgeschlagen, bei einem zweireihigen Schrägwälzlager die Wälzkörper jeder Reihe anstelle von Lagerkugeln als Kugelrollen mit jeweils zwei symmetrisch von einer Kugelgrundform abgeflachten sowie parallel zueinander angeordneten Seitenflächen auszubilden und beide Reihen ähnlich wie bei Tandem-Schrägkugellagern mit unterschiedlichen Teilkreisdurchmessern höhenversetzt nebeneinander anzuordnen. Die Kugelrollen der Reihe auf dem größeren Teilkreis weisen dabei in ihrer Kugelgrundform wiederum einen größeren Durchmesser als die Kugelrollen der Reihe auf dem kleineren Teilkreis auf und die Kugelrollen

beider Reihen rollen mit ihren Laufflächen in jeweils zwei benachbarten rillenförmigen Laufbahnen im äußeren und im inneren Lagerring ab. Die Laufbahnen der Kugelrollen weisen dabei parallel zueinander verlaufende Druckwinkelachsen auf und sind derart aneinander angrenzend angeordnet, dass die jeweils benachbarten Kugelrollen jeder Reihe mit ihren zueinander weisenden Seitenflächen unmittelbar nebeneinander angeordnet sind und sich gegenseitig führen. Durch die Verwendung von Kugelrollen als Wälzkörper soll sich ein solches Schrägwälzlager gegenüber mehrreihigen Schrägkugellagern vor allem durch einen minimierten axialen und radialen Einbauraum sowie durch eine gleiche oder erhöhte Tragfähigkeit und durch die Möglichkeit der Verwendung eines einteiligen Lagerkäfigs für beide Reihen bei vergleichbaren Herstellungskosten auszeichnen.

Als nachteilig hat es sich jedoch erwiesen, dass das vorgeschlagene Kugelrollenlager hinsichtlich der Lagerkinematik jedoch ebenfalls noch nicht optimal ausgebildet ist.

Dadurch entsteht einerseits Reibung zwischen den einzelnen Kugelrollenpaaren und andererseits wird der Lagerkäfig bei der Kugelrollenführung so hoch beansprucht, dass es zur verstärkten Wärmebildung und zu einem erhöhten Verschleiß an Wälzkörpern und Lagerkäfig und damit zum vorzeitigen Ausfall des Lagers kommt.

**Aufgabe der Erfindung**

Ausgehend von den dargelegten Nachteilen der Lösungen des bekannten Standes der Technik liegt der Erfindung deshalb die Aufgabe zu Grunde, ein Schrägwälzlager, insbesondere mehrreihiges Kugelrollenlager, zu konzipieren, bei welchem ein radialer Versatz der zueinander weisenden Seitenflächen bzw. der Rotationsachsen zweier nebeneinander angeordneter Kugelrollen vermieden wird und welches sich durch synchron zueinander abrollende Kugelrollen und damit durch verminderten Verschleiß und erhöhte Lebensdauer auszeichnet.

**Beschreibung der Erfindung**

Erfindungsgemäß wird diese Aufgabe durch ein mehrreihiges Schrägkugelrollenlager mit den Merkmalen des Anspruchs 1 gelöst.

Der Erfindung liegt somit die Erkenntnis zugrunde, dass die von Kegelrollenlagern her bekannte Hüllkegel-Lagerkinematik ein Optimum für Schrägwälzlager aller Art hinsichtlich Lagerbelastbarkeit, Verschleißminderung und Gebrauchsdauer darstellt, so dass die bisher bekanten mehrreihigen Kugelrollenlager dahingehend anzupassen waren, um deren sonstige Vorteile gegenüber Kegelrollenlagern mit den Vorteilen der Hüllkegel-Lagerkinematik zu ergänzen.

Bevorzugte Ausgestaltungen der Merkmale des erfindungsgemäß ausgebildeten Schrägwälzlagers werden in den Unteransprüchen 2 bis 5 beschrieben. Danach ist es gemäß Anspruch 2 bei dem erfindungsgemäß ausgebildeten Schrägwälzlager für die zur Erreichung der Hüllkegel-Lagerkinematik notwendige Ermittlung des Durchmessers der auf dem kleineren Teilkreis angeordneten Kugelrollen vorgesehen, dass zunächst der Abstand des größeren Teilkreises zum Schnittpunkt der gemeinsamen Rotationsachsen mit der Lagerlängsachse über die Funktion

$$l_1 = \frac{0,5 \times T_{K1}}{\sin \alpha}$$

zu ermitteln ist. Die dafür notwendigen Ausgangswerte sind bei definierten Lagerabmessungen bekannt, da für die auf dem größeren Teilkreis angeordneten Kugelrollen deren Durchmesser und deren Breite von 70% des Durchmessers sowie der Durchmesser des größeren Teilkreises und der Druckwinkel des Lagers anwendungsbezogen konstruktiv vorgegeben sind.

Ausgehend davon kann nach Anspruch 3 die Hüllkegelkinematik des erfindungsgemäß ausgebildeten Schrägwälzlagers dahingehend weitergebildet werden, dass der Durchmesser für die auf dem kleineren Teilkreis angeordneten Kugelrollen aus der aus dem Strahlensatz abgeleiteten Funktion

$$r_2 = \frac{r_1 \times l_1 - 0,7 \times r_1^2}{l_1 + 0,7 \times r_1}$$

ermittelbar ist. Dabei stellen $r_1$ und $r_2$ jeweils die halben Durchmesser der Kugelrollen beider Reihen und $l_1$ der Abstand des größeren Teilkreises zum Schnittpunkt der gemeinsamen Rotationsachsen mit der Lagerlängsachse dar.

Nach Anspruch 4 ist es bei dem erfindungsgemäß ausgebildeten Schrägwälzlager dann vorgesehen, den Abstand des kleineren Teilkreises zu dem größeren Teilkreis auf den rechtwinklig zu den Druckwinkelachsen angeordneten Rotationsachsen der Kugelrollen zu ermitteln. Bei konstruktiv vorgegebener Breite der auf dem kleineren Teilkreis angeordneten Kugelrollen von ebenfalls 70% ihres Durchmessers ist dieser Abstand durch die Funktion

$$l_2 = 0,7 \times (r_1 + r_2)$$

ermittelbar. Die Vorgabe der Breite der Kugelrollen von 70 % ihres Durchmessers erfolgt dabei deshalb, da eine solche Breite sich in der Praxis hinsichtlich der radialen und axialen Tragfähigkeit des Lagers bewährt hat und in etwa der Kontaktfläche entspricht, die auch die Kugeln herkömmlicher Rillenkugellager zu ihren Laufbahnen in den Lagerringen aufweisen.

Gemäß Anspruch 5 zeichnet sich das erfindungsgemäß ausgebildete Schrägwälzlager schließlich noch dadurch aus, dass die Seitenflächen der auf dem kleineren Teilkreis angeordneten Kugelrollen kleiner als die Seitenflächen der auf dem größeren Teilkreis angeordneten Kugelrollen ausgebildet sind und die jeweils zueinander weisenden Seitenflächen zweier benachbarter Kugelrollen beider Reihen einen geringfügigen Abstand zueinander aufweisen. Durch diesen Abstand wird ein permanenter Kontakt der benachbarten Kugelrollen beider Reihen vermieden und eine Wärmeausdehnung der Kugelrollen im Lagerbetrieb vorgehalten, gleichzeitig jedoch die gegenseitige Führungsfunktion der Kugelrollen gegen Schränkbewegungen beibehalten.

Das erfindungsgemäß ausgebildete Schrägwälzlager weist somit gegenüber den aus dem Stand der Technik bekannten Schrägwälzlagern den Vorteil auf, dass es durch die Anwendung der Hüllkegel-Lagerkinematik keinen radialen Versatz der zueinander weisenden Seitenflächen bzw. der Rotationsachsen zweier nebeneinander angeordneter Kugelrollen mehr aufweist und die Kugelrollen dadurch synchron zueinander abrollen. Dadurch zeichnet sich das erfindungsgemäß ausgebildete Schrägwälzlager durch einen minimierten Verschleiß, eine geringe Käfigbelastung und eine erhöhte Lebensdauer aus und vereint in sich die Vorteile herkömmlicher Kegelrollenlager und mehrreihiger Kugelrollenlager. Dabei ist der Einsatzbereich erfindungsgemäß ausgebildeter Schrägwälzlager nicht nur auf die beispielhaft genannte zweireihige Anwendung zur Abstützung von Wellen oder Naben mit axialer und radialer Momentbelastung beschränkt, sondern neben vielen anderen möglichen Anwendungen auch in spiegelverkehrter doppelter Anordnung direkt nebeneinander auch auf vierreihige Anwendungen im Kraftfahrzeugbereich oder dergleichen erweiterbar.

**Kurze Beschreibung der Zeichnungen**

Eine bevorzugte Ausführungsform des erfindungsgemäß ausgebildeten Schrägwälzlagers wird nachfolgend unter Bezugnahme auf die beigefügten Zeichnungen näher erläutert. Dabei zeigen:

Figur 1    einen Querschnitt durch ein erfindungsgemäß ausgebildetes Schrägwälzlager;

Figur 2    eine vergrößerte Darstellung einer Hälfte des Querschnitts durch ein erfindungsgemäß ausgebildetes Schrägwälzlager.

**Ausführliche Beschreibung der Zeichnungen**

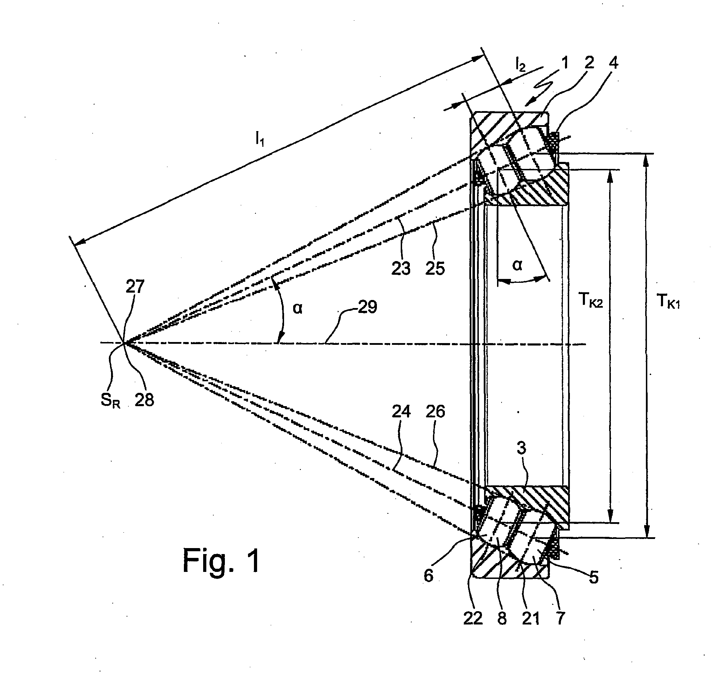

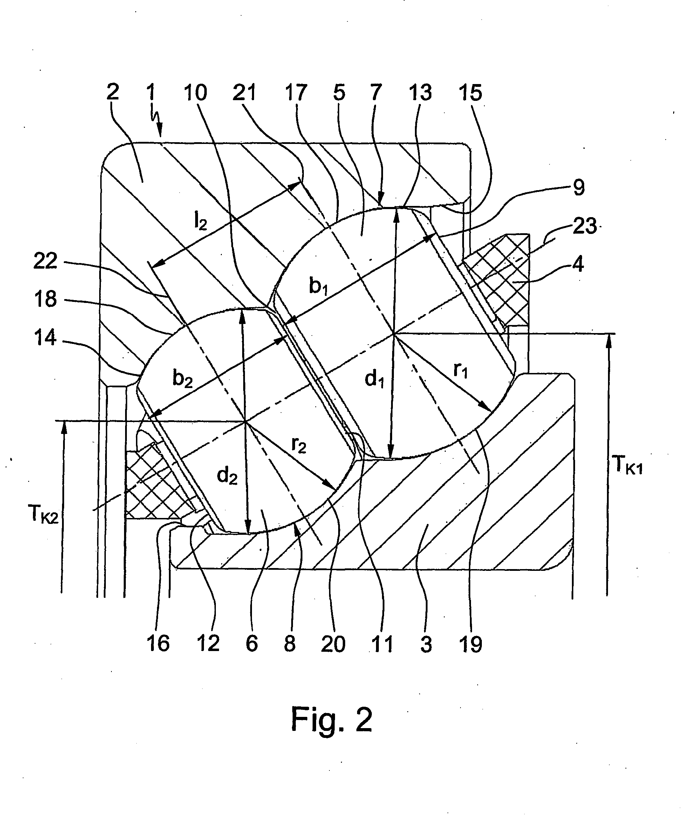

Aus Figur 1 geht deutlich ein als zweireihiges Kugelrollenlager ausgebildetes Schrägwälzlager 1 hervor, welches im Wesentlichen aus einem äußeren Lagerring 2 und einem inneren Lagerring 3 sowie aus einer Vielzahl zwischen den Lagerringen 2, 3 angeordneter und durch einen Lagerkäfig 4 in Umfangsrichtung in gleichmäßigen Abständen zueinander gehaltener Kugelrollen 5, 6 besteht. Diese Kugelrollen 5, 6 sind in zwei Reihen 7, 8 mit unterschiedlichen Teilkreisdurchmessern höhenversetzt nebeneinander angeordnet und weisen, wie aus Figur 2 ersichtlich ist, jeweils zwei symmetrisch von einer Kugelgrundform abgeflachte, parallel zueinander angeordnete Seitenflächen 9, 10 und 11, 12 auf, wobei der Durchmesser $d_1$ der Kugelrollen 5 der Reihe 7 auf dem größeren Teilkreis $T_{K1}$ größer als der Durchmesser $d_2$ der Kugelrollen 6 der Reihe 8 mit dem kleineren Teilkreis $T_{K2}$ ist. Darüber hinaus rollen die Kugelrollen 5, 6 beider Reihen 7, 8 mit ihren Laufflächen 13, 14 in jeweils zwei benachbarten, in die Innenseite 15 des äußeren Lagerrings 2 und in die Außenseite 16 des inneren Lagerrings 3 eingearbeitete rillenförmigen Laufbahnen 17, 18, 19, 20 ab, die parallel zueinander verlaufende Druckwinkelachsen 21, 22 aufweisen und derart aneinander angrenzend angeordnet sind, dass die jeweils benachbarten Kugelrollen 5, 6 beider Reihen 7, 8 mit ihren zueinander weisenden Seitenflächen 10, 11 unmittelbar nebeneinander angeordnet sind.

Bei diesem Schrägwälzlager 1 sind die benachbarten Kugelrollen 5, 6 beider Reihen 7, 8 jeweils auf einer gemeinsamen, rechtwinklig zu den Druckwinkelachsen 21, 22 verlaufenden Rotationsachse 23, 24 angeordnet und weisen derart bemessene Durchmesser $d_1$, $d_2$ und Breiten $b_1$, $b_2$ auf, dass sämtliche diese Kugelrollen 5, 6 an ihren Durchmessern $d_1$, $d_2$ tangierende und in Figur 1 durch Strich-Punkt-Linien angedeutete Hüllkegel 25, 26 mit ihren Kegelspitzen 27, 28 genau auf dem Schnittpunkt $S_R$ der gemeinsamen Rotationsachsen 23, 24 mit der Lagerlängsachse 29 angeordnet sind.

Bei definierten Lagerabmessungen sind dabei für die auf dem größeren Teilkreis $T_{K1}$ angeordneten Kugelrollen 5 die in den Zeichnungen gezeigten Ausgangswerte des Durchmesser $d_1$ und der Breite $b_1$ von $0,7d_1$ dieser Kugelrollen 5, der Durchmesser des größeren Teilkreises $T_{K1}$ und der Druckwinkel $\alpha$ konstruktiv vorgegeben, so dass zur Ermittlung des Durchmessers $d_2$ der Kugelrollen 6 auf dem kleineren Teilkreis $T_{K2}$ aus diesen Werten über die Funktion

$$l_1 = \frac{0,5 \times T_{K1}}{\sin \alpha}$$

zunächst der Abstand $l_1$ des Teilkreises $T_{K1}$ zum Schnittpunkt $S_R$ der gemeinsamen Rotationsachsen 23, 24 mit der Lagerlängsachse 29 ermittelbar ist.

Mit dem ermittelten Abstand $l_1$ ist anschließend der Durchmesser $d_2$ für die auf dem kleineren Teilkreis $T_{K2}$ angeordneten Kugelrollen 6 aus der Funktion

$$r_2 = \frac{r_1 \times l_1 - 0,7 \times r_1^2}{l_1 + 0,7 \times r_1}$$

ermittelbar, wobei $r_1$ und $r_2$, wie in Figur 2 angedeutet, jeweils die halben Durchmesser $d_1$, $d_2$ der Kugelrollen 5, 6 beider Reihen 7, 8 sind.

Zur Fertigstellung der Hüllkegel-Lagerkinematik ist dann mit dem ermittelten Durchmesser $d_2$ für die auf dem kleineren Teilkreis $T_{K2}$ angeordneten Kugelrollen 6 der Abstand $l_2$ des kleineren Teilkreises $T_{K2}$ zu dem größeren Teilkreis $T_{K1}$ auf den rechtwinklig zu den Druckwinkelachsen 21, 22 angeordneten Rotationsachsen 23, 24 der Kugelrollen 5, 6 durch die Funktion

$$l_2 = 0,7 \times (r_1 + r_2)$$

ermittelbar, wobei Breite $b_2$ der auf dem kleineren Teilkreises $T_{K2}$ angeordneten Kugelrollen 6 von $0,7d_2$ ebenfalls konstruktiv vorgegeben ist.

Aus Figur 2 geht schließlich auch noch hervor, dass die Seitenflächen 11, 12 der auf dem kleineren Teilkreis $T_{K2}$ angeordneten Kugelrollen 6 kleiner als die Seitenflächen 9, 10 der auf dem größeren Teilkreis $T_{K1}$ angeordneten Kugelrollen 5 ausgebildet sind und dass die jeweils zueinander weisenden Seitenflächen 10, 11 zweier benachbarter Kugelrollen 5, 6 beider Reihen 7, 8 einen geringfügigen Abstand zueinander aufweisen, durch den ein permanenter Kontakt der benachbarten Kugelrollen 5, 6 beider Reihen 7, 8 vermieden und eine Wärmeausdehnung der Kugelrollen 5, 6 im Lagerbetrieb vorgehalten wird.

## Bezugszahlenliste

| | |
|---|---|
| 1 | Kugelrollenlager |
| 2 | äußerer Lagerring |
| 3 | innerer Lagerring |
| 4 | Lagerkäfig |
| 5 | Kugelrollen |
| 6 | Kugelrollen |
| 7 | Reihe |
| 8 | Reihe |
| 9 | Seitenfläche von 5 |
| 10 | Seitenfläche von 5 |
| 11 | Seitenfläche von 6 |
| 12 | Seitenfläche von 6 |
| 13 | Lauffläche von 5 |
| 14 | Lauffläche von 6 |
| 15 | Innenseite von 2 |
| 16 | Außenseite von 3 |
| 17 | Laufbahn in 15 |
| 18 | Laufbahn in 15 |
| 19 | Laufbahn in 16 |
| 20 | Laufbahn in 16 |
| 21 | Druckwinkelachse |
| 22 | Druckwinkelachse |
| 23 | Rotationsachse |
| 24 | Rotationsachse |
| 25 | Hüllkegel |
| 26 | Hüllkegel |
| 27 | Kegelspitze |
| 28 | Kegelspitze |
| 29 | Lagerlängsachse |
| $S_R$ | Schnittpunkt von 23, 24 mit 29 |
| $T_{K1}$ | größerer Teilkreis |
| $T_{K2}$ | kleinerer Teilkreis |
| $d_1$ | Durchmesser von 5 |
| $d_2$ | Durchmesser von 6 |
| $b_1$ | Breite von 5 |
| $b_2$ | Breite von 6 |
| $r_1$ | Radius von 5 |
| $r_2$ | Radius von 6 |
| $\alpha$ | Druckwinkel |
| $l_1$ | Abstand von $T_{K1}$ zu $S_R$ |
| $l_2$ | Abstand von $T_{K1}$ zu $T_{K2}$ |

## Patentansprüche

1. Mehrreihiges Schrägkugelrollenlager, welches im Wesentlichen aus einem äußeren Lagerring (2) und einem inneren Lagerring (3) sowie aus einer Vielzahl zwischen den Lagerringen (2, 3) angeordneter und durch einen Lagerkäfig (4) in Umfangsrichtung in gleichmäßigen Abständen zueinander gehaltener Kugelrollen (5, 6) besteht, die in zumindest zwei Reihen (7, 8) mit unterschiedlichen Teilkreisdurchmessern höhenversetzt nebeneinander angeordnet sind und jeweils zwei symmetrisch von einer Kugelgrundform abgeflachte, parallel zueinander angeordnete Seitenflächen (9, 10, 11, 12) aufweisen, wobei der Durchmesser ($d_1$) der Kugelrollen (5) der Reihe (7) auf dem größeren Teilkreis ($T_{K1}$) größer als der Durchmesser ($d_2$) der Kugelrollen (6) der Reihe (8) mit dem kleineren Teilkreis ($T_{K2}$) ist, die Kugelrollen (5, 6) beider Reihen (7, 8) mit ihren Laufflächen (13, 14) in jeweils zwei benachbarten, in die Innenseite (15) des äußeren Lagerrings (2) und in die Außenseite (16) des inneren Lagerrings (3) eingearbeitete rillenförmigen Laufbahnen (17, 18, 19, 20) abrollen, die parallel zueinander verlaufende Druckwinkelachsen (21, 22) aufweisen und derart aneinander angrenzend angeordnet sind, dass die jeweils benachbarten Kugelrollen (5, 6) beider Reihen (7, 8) mit ihren zueinander weisenden Seitenflächen (10, 11) unmittelbar nebeneinander angeordnet sind, die benachbarten Kugelrollen (5, 6) beider Reihen (7, 8) jeweils auf einer gemeinsamen, rechtwinklig zu den Druckwinkelachsen (21, 22) verlaufenden Rotationsachse (23, 24) angeordnet sind und die Kugelrollen (5,6) beider Reihen (7,8) derart bemessene Durchmesser ($d_1$, $d_2$) und Breiten ($b_1$, $b_2$) aufweisen, dass sämtliche diese Kugelrollen (5, 6) an ihren Durchmessern ($d_1$, $d_2$) tangierende Hüllkegel (25, 26) mit ihren Kegelspitzen (27, 28) genau auf dem Schnittpunkt ($S_R$) der gemeinsamen Rotationsachsen (23, 24) mit der Lagerlängsachse (29) angeordnet sind.

2. Schrägkugelrollenlager nach Anspruch 1, **dadurch gekennzeichnet, dass** bei definierten Lagerabmessungen für die auf dem größeren Teilkreis ($T_{K1}$) angeordneten Kugelrollen (5) der Durchmesser ($d_1$) und die Breite ($b_1$) von $0,7d_1$, der Durchmesser des Teilkreises ($T_{K1}$) und der Druckwinkel ($\alpha$) konstruktiv vorgegeben sind und aus diesen Werten der Abstand ($l_1$) des Teilkreises ($T_{K1}$) zum Schnittpunkt ($S_R$) der gemeinsamen Rotationsachsen (23, 24) mit der Lagerlängsachse (29) über die Funktion

$$l_1 = \frac{0,5 \times T_{K1}}{\sin \alpha}$$ ermittelbar ist.

3. Schrägkugelrollenlager nach Anspruch 2, **dadurch gekennzeichnet, dass** der Durchmesser ($d_2$) für die auf dem kleineren Teilkreis ($T_{K2}$) angeordneten Kugelrollen (6) aus der Funktion

$$r_2 = \frac{r_1 \times l_1 - 0,7 \times r_1^2}{l_1 + 0,7 \times r_1}$$ ermittelbar ist, wobei $r_1$

und $r_2$ jeweils die halben Durchmesser ($d_1$, $d_2$) der Kugelrollen (5, 6) beider Reihen (7, 8) und $l_1$ der Abstand des größeren Teilkreises ($T_{K1}$) zum Schnittpunkt ($S_R$) der gemeinsamen Rotationsachsen (23, 24) mit der Lagerlängsachse (29) ist.

4. Schrägkugelrollenlager nach Anspruch 3, **dadurch gekennzeichnet, dass** der Abstand ($l_2$) des kleineren Teilkreises ($T_{K2}$) zu dem größeren Teilkreis ($T_{K1}$) auf den rechtwinklig zu den Druckwinkelachsen (21, 22) angeordneten Rotationsachsen (23, 24) der Kugelrollen (5, 6) bei konstruktiv vorgegebener Breite

($b_2$) der auf dem kleineren Teilkreises ($T_{K2}$) angeordneten Kugelrollen (6) von $0,7d_2$ durch die Funktion $l_2 = 0,7 \times (r_1 + r_2)$ ermittelbar ist.

5. Schrägkugelrollenlager nach Anspruch 1 bis 4, **dadurch gekennzeichnet, dass** die Seitenflächen (11, 12) der auf dem kleineren Teilkreis ($T_{K2}$) angeordneten Kugelrollen (6) kleiner als die Seitenflächen (9, 10) der auf dem größeren Teilkreis ($TK_1$) angeordneten Kugelrollen (5) ausgebildet sind und die jeweils zueinander weisenden Seitenflächen (10, 11) zweier benachbarter Kugelrollen (5, 6) beider Reihen (7, 8) einen geringfügigen Abstand zueinander aufweisen.

## Claims

1. Multi-row angular contact spherical-roller bearing, which is composed substantially of an outer bearing ring (2) and an inner bearing ring (3) and of a plurality of spherical rollers (5, 6) which are arranged between the bearing rings (2, 3) and which are held at uniform intervals with respect to one another in the circumferential direction by means of a bearing cage (4), which spherical rollers (5, 6) are arranged in at least two rows (7, 8) with different pitch circle diameters adjacent to one another and offset in height, and which spherical rollers (5, 6) have in each case two side surfaces (9, 10, 11, 12) which are flattened symmetrically from a spherical basic shape and which are arranged parallel to one another, with the diameter ($d_1$) of the spherical rollers (5) of the row (7) on the larger pitch circle ($T_{K1}$) being greater than the diameter ($d_2$) of the spherical rollers (6) of the row (8) with the smaller pitch circle ($T_{K2}$), with the spherical rollers (5, 6) of the two rows (7, 8) rolling with their running surfaces (13, 14) in in each case two adjacent groove-shaped raceways (17, 18, 19, 20) which are formed in the inner side (15) of the outer bearing ring (2) and in the outer side (16) of the inner bearing ring (3), which raceways (17, 18, 19, 20) have pressure angle axes (21, 22) running parallel to one another and are arranged so as to adjoin one another in such a way that the in each case adjacent spherical rollers (5, 6) of the two rows (7, 8) are arranged directly adjacent to one another with their side surfaces (10, 11) which point toward one another, the adjacent spherical rollers (5, 6) of the two rows (7, 8) being arranged in each case on a common rotational axis (23, 24), which runs at right angles to the pressure angle axes (21, 22), and the spherical rollers (5, 6) of the two rows (7, 8) having diameters ($d_1$, $d_2$) and widths ($b_1$, $b_2$) which are dimensioned such that all of said spherical rollers (5, 6) are arranged, at their conical envelope (25, 26) which makes contact at a tangent with their diameters ($d_1$, $d_2$), with their cone tips (27, 28) precisely on the point of intersection ($S_R$) of the common rotational axes (23, 24) with the bearing longitudinal axis (29).

2. Angular contact spherical-roller bearing according to Claim 1, **characterized in that**, given defined bearing dimensions, for the spherical rollers (5) arranged on the larger pitch circle ($T_{K1}$), the diameter ($d_1$) and the width ($b_1$) of $0.7d_1$, the diameter of the pitch circle ($T_{K1}$) and the pressure angle ($\alpha$) are structurally predefined and, from said values, the spacing ($l_i$) of the pitch circle ($T_{K1}$) to the point of intersection ($S_R$) of the common rotational axes (23, 24) with the bearing longitudinal axis (29) can be determined by the function .

3. Angular contact spherical-roller bearing according to Claim 2, **characterized in that** the diameter ($d_2$) for the spherical rollers (6) arranged on the smaller pitch circle ($T_{K2}$) can be determined from the function

$$r_2 \; = \; \frac{r_1 \times l_1 - 0.7 \times r_1^2}{l_1 + 0.7 \times r_1} \; ,$$

where $r_1$ and $r_2$ are in each case half of the diameter ($d_1$, $d_2$) of the spherical rollers (5, 6) of the two rows (7, 8) and $l_1$ is the spacing of the larger pitch circle ($T_{K1}$) to the point of intersection ($S_R$) of the common rotational axes (23, 24) with the bearing longitudinal axis (29).

4. Angular contact spherical-roller bearing according to Claim 3, **characterized in that** the spacing ($l_2$) of the smaller pitch circle ($T_{K2}$) to the larger pitch circle ($T_{K1}$) on the rotational axes (23, 24), which are arranged at right angles to the pressure angle axes (21, 22), of the spherical rollers (5, 6) can be determined, for a structurally predefined width ($b_2$), of $0.7d_2$, of the spherical rollers (6) arranged on the smaller pitch circle ($TK_2$), by the function $l_2 = 0.7 \times (r_1 + r_2)$.

5. Angular contact spherical-roller bearing according to Claims 1 to 4, **characterized in that** the side surfaces (11, 12) of the spherical rollers (6) arranged on the smaller pitch circle ($T_{K2}$) are smaller than the side surfaces (9, 10) of the spherical rollers (5) arranged on the larger pitch circle ($T_{K1}$), and the side surfaces (10, 11), which point toward one another in each case, of two adjacent spherical rollers (5, 6) of the two rows (7, 8) have a slight spacing to one another.

**Revendications**

1. Palier à rouleaux sphériques à plusieurs rangées à contact oblique, qui se compose essentiellement d'une bague de palier extérieure (2) et d'une bague de palier intérieure (3) ainsi que d'une pluralité de rouleaux sphériques (5, 6) disposés entre les bagues de palier (2, 3) et maintenus à intervalles réguliers les uns des autres dans la direction périphérique par une cage de palier (4), lesquels sont disposés de manière décalée en hauteur dans au moins deux rangées (7, 8) avec des diamètres de cercle partiel différents et présentent à chaque fois deux surfaces latérales (9, 10, 11, 12) disposées parallèlement l'une à l'autre, aplaties de manière symétrique à partir d'une forme de base sphérique, le diamètre ($d_1$) des rouleaux sphériques (5) de la rangée (7) sur le plus grand cercle partiel ($T_{K1}$) étant plus grand que le diamètre ($d_2$) des rouleaux sphériques (6) de la rangée (8) avec le plus petit cercle partiel ($T_{K2}$), les rouleaux sphériques (5, 6) des deux rangées (7, 8) roulant avec leurs surfaces de roulement (13, 14) dans deux pistes de roulement adjacentes (17, 18, 19, 20) respectives, en forme de rainures, pratiquées dans le côté intérieur (15) de la bague de palier extérieure (2) et dans le côté extérieur (16) de la bague de palier intérieure (3), lesquelles pistes de roulement présentent des axes d'angle de pression (21, 22) s'étendant parallèlement l'un à l'autre et sont disposées de manière adjacente l'une à l'autre de telle sorte que les rouleaux sphériques respectivement adjacents (5, 6) des deux rangées (7, 8) soient disposés directement les uns à côté des autres avec leurs surfaces latérales tournées l'une vers l'autre (10, 11), les rouleaux sphériques adjacents (5, 6) des deux rangées (7, 8) étant disposés à chaque fois sur un axe de rotation (23, 24) commun s'étendant à angle droit par rapport aux axes d'angle de pression (21, 22), et les rouleaux sphériques (5, 6) des deux rangées (7, 8) présentant des diamètres ($d_1$, $d_2$) et des largeurs ($b_1$, $b_2$) dimensionnés de telle sorte que tous ces rouleaux sphériques (5, 6) soient disposés au niveau de cônes d'enveloppement (25, 26) tangents à leurs diamètres ($d_1$, $d_2$) avec leurs points de cône (27, 28) exactement sur le point d'intersection ($S_R$) des axes de rotation communs (23, 24) avec l'axe longitudinal du palier (29).

2. Palier à rouleaux sphériques à contact oblique selon la revendication 1, **caractérisé en ce que** pour des dimensions de palier définies pour les rouleaux sphériques (5) disposés sur le plus grand cercle partiel ($T_{K1}$), le diamètre ($d_1$) et la largeur ($b_1$) de 0,7 $d_1$, le diamètre du cercle partiel ($T_{K1}$) et l'angle de pression ($\alpha$ sont prédéfinis par la construction et la distance ($l_1$) du cercle partiel ($T_{K1}$) au point d'intersection ($S_R$) des axes de rotation communs (23, 24) avec l'axe longitudinal du palier (29) peut être déterminée à partir de ces valeurs par la fonction

$$l_1 = \frac{0{,}5 \times T_{K1}}{\sin \alpha} \ .$$

3. Palier à rouleaux sphériques à contact oblique selon la revendication 2, **caractérisé en ce que** le diamètre $(d_2)$ pour les rouleaux sphériques (6) disposés sur le plus petit cercle partiel $(T_{K2})$ peut être déterminé à partir de la fonction

$$r_2 = \frac{r_1 \times l_1 - 0{,}7 \times r_1^2}{l_1 + 0{,}7 \times r_1} \ , \ r_1 \text{ et } r_2 \text{ étant respective-}$$

ment les demi-diamètres $(d_1 \ d_2)$ des rouleaux sphériques (5, 6) des deux rangées (7, 8) et $l_1$ étant la distance du plus grand cercle partiel $(T_{K1})$ au point d'intersection $(S_R)$ des axes de rotation communs (23, 24) avec l'axe longitudinal du palier (29).

4. Palier à rouleaux sphériques à contact oblique selon la revendication 3, **caractérisé en ce que** la distance $(l_2)$ du plus petit cercle partiel $(T_{K2})$ au plus grand cercle partiel $(T_{K1})$ sur les axes de rotation (23, 24) des rouleaux sphériques (5, 6) disposés à angle droit par rapport aux axes d'angle de pression (21, 22) peut être déterminée pour une largeur $(b_2)$ prédéfinie par la construction des rouleaux sphériques (6) disposés sur le plus petit cercle partiel $(T_{K2})$ de $0{,}7d_2$ par la fonction $l_2 = 0{,}7 \times (r_1 + r_2)$.

5. Palier à rouleaux sphériques à contact oblique selon les revendications 1 à 4, **caractérisé en ce que** les surfaces latérales (11, 12) des rouleaux sphériques (6) disposés sur le plus petit cercle partiel $(T_{K2})$ sont inférieures aux surfaces latérales (9, 10) des rouleaux sphériques (5) disposés sur le plus grand cercle partiel $(T_{K1})$, et les surfaces latérales (10, 11) tournées à chaque fois l'une vers l'autre de deux rouleaux sphériques adjacents (5, 6) des deux rangées (7, 8) présentent un léger espacement l'une de l'autre.

Fig. 1

EP 1 977 125 B1

Fig. 2

**EP 1 977 125 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19839481 A1
- DE 497760 C
- DE 331455 C
- DE 102005029983 A
- WO 2007000149 A